Europäisches Patentamt

European Patent Office

Office européen des brevets

(11) Numéro de publication: **0 216 682**
**B1**

(12) # FASCICULE DE BREVET EUROPEEN

(45) Date de publication du fascicule du brevet:
**09.05.90**

(51) Int. Cl.⁵: **F16K 11/072, F24F 13/04,**
**F24H 9/20, F16K 11/085**

(21) Numéro de dépôt: **86401904.7**

(22) Date de dépôt: **29.08.86**

(54) **Vanne de mélange de fluides distincts, son procédé d'utilisation et son application à une installation de climatisation par air pulsé.**

(30) Priorité: **05.09.85 FR 8513198**

(43) Date de publication de la demande:
**01.04.87 Bulletin 87/14**

(45) Mention de la délivrance du brevet:
**09.05.90 Bulletin 90/19**

(84) Etats contractants désignés:
**AT BE CH DE GB IT LI LU NL SE**

(56) Documents cités:
**FR-A- 2 260 043**
**FR-A- 2 519 741**
**GB-A- 513 422**
**GB-A- 1 091 812**
**US-A- 3 618 508**
**US-A- 3 994 335**

(73) Titulaire: **GAZ DE FRANCE, 23, rue Philibert Delorme,**
**F-75017 Paris(FR)**

(72) Inventeur: **Grochowsky, Guy, 38, avenue de la Division**
**Leclerc, F-95170 Deuil la Barre(FR)**
Inventeur: **Drouhin, Bernard, 29, avenue Auguste Perret,**
**F-95200 Sarcelles(FR)**

(74) Mandataire: **Lerner, François, 5, rue Jules Lefèbvre,**
**F-75009 Paris(FR)**

ACTORUM AG

## Description

La présente invention a pour objet une vanne destinée à mélanger, en sortie, plusieurs flux de fluides gazeux issus de conduits différents.

Ce type de vanne peut avoir des applications très diverses en utilisant différents fluides, et peut tout particulièrement être adapté sur des installations de climatisation par fluide(s) gazeux pulsé(s) sur lesquelles elle module la puissance en adaptant, aux besoins du local et pour un débit de sortie fixé, la température des fluides distribués.

De façon plus spécifique, la vanne de mélange conforme à l'invention, est du type comportant:

– une partie fixe dans laquelle sont ménagées deux familles d'orifices dont chacune est reliée à l'un desdits conduits d'alimentation en fluide,

– et une partie mobile propre à obturer ou à découvrir plus ou moins l'un au moins des orifices de l'une des familles tout en découvrant ou en obturant de façon concomitante l'un au moins des orifices de l'autre famille.

Divers travaux ont été effectués sur des vannes de ce type. Certaines d'entre elles comportent deux parties mobiles qui fonctionnant simultanément et en sens inverse pour obturer chacune un orifice d'admission de fluide (en général de l'air). Ces vannes nécessitent donc une commande mobile sur chaque flux et une liaison mécanique permettant d'actionner et de coordonner le déplacement des deux parties mobiles. Aussi n'offrent-elles pas une compacité et une fiabilité suffisante. De plus, elles nécessitent la présence d'une chambre de mélange.

Dans le cas de générateurs mixtes eau chaude sanitaire-air chaud, la modulation est généralement obtenue par deux volets directionnels qui obturent plus ou moins les circuits de chauffage d'air autour d'un accumulateur de chaleur. Des problèmes se posent lorsque l'on veut réguler, de façon progressive, le débit des fluides dans des proportions souhaitées.

Bien entendu, il existe encore d'autres dispositifs de mélange pour fluide gazeux.

Au brevet US-A 3 618 508, est décrit un appareil comprenant une partie fixe dans une paroi de laquelle sont ménagés des orifices d'entrée et de sortie de gaz (air chaud et air froid), ainsi qu'une partie mobile en forme de disque susceptible de fermer plus ou moins l'une et/ou l'autre des entrées et sorties de gaz. Plus précisément, les orifices de la partie fixe sont formés dans une paroi latérale cylindrique tel la partie mobile, qui est montée pivotante par rapport à cette partie fixe, comprend des déflecteurs galbés pour la fermeture des orifices.

Quant au document GB-A 513 422, il fait référence à une vanne comportant une série de panneaux formés en secteurs de disque et montés pivotant sur un arbre central, lequel porte également la partie fixe de la vanne où sont ménagés des séries d'orifices présentant, eux aussi, l'aspect de secteurs de disque. Certains problèmes relatifs à la compacité des vannes et à l'adaptation fine de la régulation des gaz restent malgré tout posés.

L'invention a pour objet d'apporter une solution à ces problèmes.

A cet effet, il est proposé que selon une première caractéristique de l'invention, le type de vanne susmentionné soit tel que:

– la partie fixe comprenne un orifice central appartenant à ladite première famille d'orifices, cet orifice central étant entouré par plusieurs autres orifices de dimension réduite appartenant à ladite seconde famille d'orifices, l'ensemble de ces orifices étant ménagé dans un même plan,

– et que la partie mobile comporte deux plaques mobiles en translation dans un mouvement de rapprochement ou d'écartement relatif effectué dans un plan sensiblement parallèle au plan dans lequel sont ménagés les orifices de la partie fixe.

De cette façon, un mélange progressif des flux de fluides gazeux pourra être assuré dans les proportions souhaitées. En outre, une telle vanne pourra tout à fait être utilisée en tant qu'organe de commande d'une chaîne de régulation. Elle sera en outre d'un encombrement particulièrement réduit. Selon une autre caractéristique de l'invention la forme des orifices de l'une au moins des familles sera de préférence adaptée pour obtenir un loi souhaitée correspondant à la proportion de fluide(s) mélangé(s) en fonction du pourcentage d'ouverture des orifices.

Avantageusement, la vanne de modulation pourra en outre être adaptée sur une installation de climatisation d'un local par air pulsé, pour assurer la modulation progressive de la puissance de l'installation. On notera qu'une telle régulation permettra de limiter les problèmes de stratification de température, de diminuer le différentiel dynamique de la température ambiante, et de réduire la fréquence des montées et des descentes en températures du local à chauffer en récupérant mieux les apports gratuits et internes fournis par ce local.

L'invention, ses caractéristiques et avantages apparaîtront plus clairement à l'aide de la description qui va suivre, faite en référence aux dessins annexés dans lesquels:

– la figure 1 présente de façon schématique la structure de la vanne selon l'invention, et

– la figure 2 montre une installation de climatisaton par air pulsé utilisant la vanne de la figure 1.

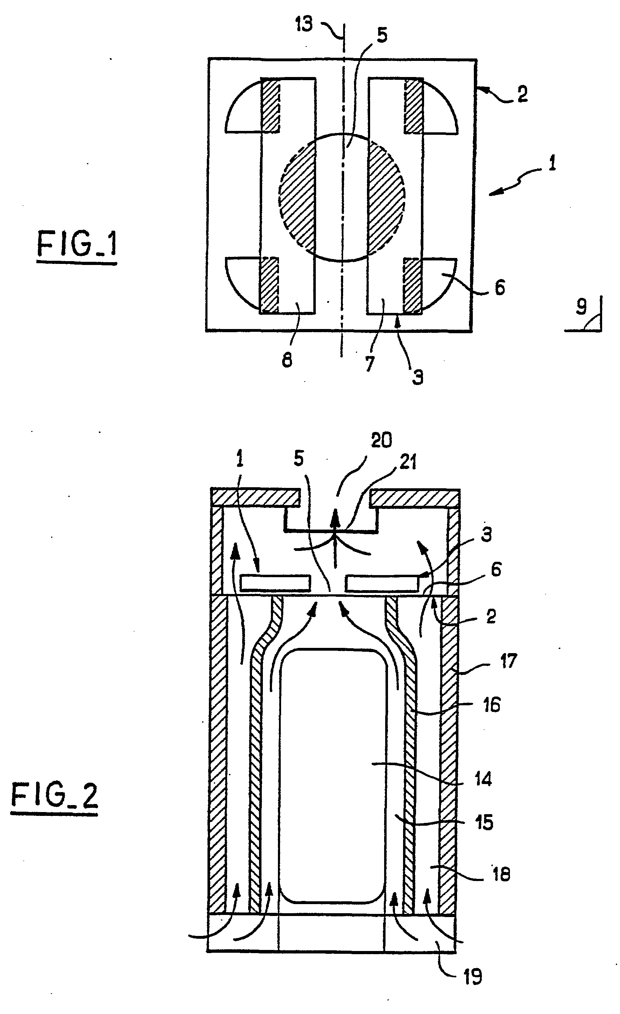

En se reportant tout d'abord à cette figure 1, on remarquera que la vanne, repérée dans son ensemble 1, comporte essentiellement une partie fixe 2 dans laquelle sont ménagées au moins deux familles d'orifices 5, 6, et une partie mobile 3 pouvant obturer ou découvrir plus ou moins au moins l'un des orifices d'une des familles 5, 6 de la partie fixe 2 alors que simultanément elle découvre ou obture, plus ou moins, au moins l'un des orifices de l'autre des familles 5, 6. Chaque famille d'orifices 5, 6 de la partie fixe est reliée en aval de la vanne à un conduit (non représenté) d'admission séparée de fluide(s).

Sur cette figure 1 on remarquera que la première famille d'orifices 5 se présente sous la forme d'un orifice circulaire central trandis que la seconde famille d'orifices 6 se présente sous la forme de quatre orifices à section en quart de cercle d'une surface de préférence équivalente à celle de l'orifice central 5.

Quant à la partie mobile 3, elle est constituée par deux plaques 7, 8 coplanaires. Le déplacement des deux plaques 7, 8 est assuré simultanément, et éventuellement symétriquement, par exemple par une vis à pas inversé (non représentée) qui leur permet de coulisser l'une par rapport à l'autre en s'écartant de leur axe de jonction 13. Les deux plaques sont constituées notamment par un matériau isolant (non représenté) de façon que lorsqu'elles obturent complètement l'une des familles d'orifices, elles en assurent l'isolation thermique. Les deux plaques 7, 8 se déplacent dans un plan de manœuvre 9 sensiblement parallèle au plan d'ouverture et de fermeture des deux familles d'orifices 5, 6 de la partie fixe 2.

Comme illustré sur la figure 2, une telle vanne est en particulier adaptable sur une installation de climatisation par air pulsé, du type comportant un corps de chauffe ou échangeur de chaleur 14 autour duquel circule un fluide chaud 15, une paroi isolante 16 entourant le fluide chaud 15 et une enceinte d'isolation externe entre lesquelles circule un fluide froid 18. Les deux flux 15, 18 s'écoulent entre une admission 19 disposée en amont de l'accumulateur 14 et une évacuation 20 disposée en aval de celui-ci comportant un aspirateur-ventilateur schématisé en 21. Les caractéristiques amont et aval sont repérées en référence à l'écoulement des flux, tel que représenté par les flèches à la figure 2.

On note que l'on obtient en amont de la vanne un mélange de fluide à température variable suivant le débit de fluide chaud s'écoulant à travers l'orifice 5 et le débit de fluide froid s'écoulant à travers l'orifice 6.

La vanne de modulation 1 permet donc de réaliser une modulation en température par mélange en sortie de celle-ci de deux flux thermiques l'un chaud, l'autre froid. Entraînée par un moteur à deux sens de rotation (non représenté), la vanne peut être commandée par un régulateur du type "proportionnel intégral dérivé" et assurer, de ce fait, la modulation de la puissance de l'installation en fonction des besoins du local à chauffer. En fonctionnement "Eté" elle assure la fermeture de l'orifice 5 et évite ainsi le tirage parasite autour du corps de chauffe 14.

Concernant la vanne de l'invention, on notera encore que la partie mobile 3 peut découvrir ou obturer complètement tous les orifices desdites familles 5, 6 de la partie fixe 2. En particulier, lorsque la partie mobile 3, qui se déplace au voisinage des différents orifices de la partie 2, découvre une partie au moins de la surface des orifices d'une famille 5, pour libérer progressivement le débit de l'un des flux, elle obture bien entendu simultanément une partie au moins de la surface des orifices de l'autre famille 6, pour diminuer progressivement le débit de l'autre flux. La partie mobile 3 peut être arrêtée dans toutes les positions intermédiaires (entre l'ouverture et la fermeture complète) de façon à moduler à volonté le débit des flux. La vanne 1 effectue donc à sa sortie, et simultanément, le mélange et la régulation des deux flux. Il n'est pas nécessaire de prévoir de chambre de prémélange particulière. De plus, sa structure en matériau isolant lui permet d'assurer la fonction d'obturateur thermique.

Diverses variantes peuvent être apportées au mode de réalisation illustré et décrit. On peut, notamment prévoir, différents systèmes d'entraînement des plaques de la partie mobile présentée à la figure 1. Leur déplacement peut être assuré par un ensemble pignon-crémaillère. Un moteur d'entraînement, dont l'axe est perpendiculaire au plan de manœuvre des plaques, peut aussi permettre leur déplacement dans un mouvement d'un quart de tour.

Enfin, on notera que si les pertes de charge des conduits d'admission, reliés aux familles d'orifices 5, 6, sont équivalentes, la proportion de mélange des flux de fluides varie sensiblement linéairement avec le pourcentage d'ouverture des orifices.

Cependant, si l'on adapte en les modifiant la forme de trous de la famille 6 ou de la famille 5, la proportion de fluide(s) mélangé(s) en fonction du pourcentage d'ouverture des orifices ne varie plus linéairement; on peut adapter cette forme en fonction de la loi non linéaire que l'on souhaite obtenir et qui traduit une réponse voulue et déterminée de la vanne.

## Revendications

1. Vanne de mélange destinée à une installation de climatisation par fluide(s) gazeux pulsé(s) pour adapter l'écoulement de ce(s) fluide(s) qui est (sont) issu(s) de conduits d'alimentation séparés, la vanne étant du type comprenant:

  – une partie fixe (2) dans laquelle sont ménagées deux familles d'orifices (5, 6) dont chacune est reliée à l'un desdits conduits d'alimentation en fluide,

  – et une partie mobile (3) propre à obturer ou à découvrir plus ou moins l'un au moins des orifices (5) de l'une des familles tout en découvrant ou en obturant de façon concomitante l'un au moins des orifices de l'autre famille (6),

caractérisée en ce que la partie fixe (2) comprend un orifice central (5) qui appartient à la première famille d'orifices et est entouré par plusieurs autres orifices (6) de dimension réduite appartenant à la seconde famille d'orifices, l'ensemble de ces orifices étant ménagé dans un même plan (9), et en ce que la partie mobile (3) comporte deux plaques (7, 8) mobiles en translation dans un mouvement de rapprochement ou d'écartement relatif effectué dans un plan sensiblement parallèle au plan dans lequel sont ménagés les orifices (5, 6) de la partie fixe (2).

2. Vanne de mélange selon la revendication 1 caractérisée en ce qu'en section, la surface de l'orifice central (5) est équivalente à celle de l'ensemble des orifices (6) de la seconde famille qui l'entourent.

3. Vanne de mélange selon la revendication 1 ou la revendication 2, caractérisée en ce que l'orifice central présente une section circulaire, les orifices (6) de la seconde famille qui l'entourent et qui sont au nombre de quatre ayant chacun une section en quart de cercle.

4. Vanne de mélange selon la revendication 1 ou la revendication 2 caractérisée en ce que la forme des orifices (5, 6) de l'une au moins des familles est adaptée pour obtenir une loi souhaitée correspondant à la proportion de fluides mélangés en fonction du pourcentage d'ouverture des orifices.

5. Application d'une vanne de mélange selon l'une quelconque des revendications précédentes à une installation de climatisation par air pulsé du type comportant:
 – un corps de chauffe (14) formant accumulateur de chaleur autour duquel circule et se réchauffe un fluide chaud (15)
 – une paroi isolante intermédiaire (17) qui entoure le flux de fluide chaud et autour de laquelle circule un flux de fluide froid (18)
 – et une enceinte externe isolante (17) entourant le flux de fluide froid (18)
les deux flux de fluides chaud (15) et froid (18) circulant dans l'installation entre une admission (19) située, dans le sens de la circulation des flux de fluides, en amont du corps de chauffe (14) et une évacuation (20) située en aval de ce même corps de chauffe, caractérisée en ce que pour la régulation des deux flux de fluides, on utilise une telle vanne de mélange en la disposant en aval du corps de chauffe (14) sur le chemin de passage des deux flux de fluides (15, 18).

## Claims

1. A mixing valve intended for an air conditioning plant employing pulsed gaseous media in order to adapt the flow of these media emanating from separate supply pipes, the valve being of the type comprising:
 – a fixed part (2) in which there are two groups of orifices (5, 6), each of which is connected to one of the media supply pipes,
 – and a movable part (3) adapted more or less to occlude or expose one at least of the orifices (5) in one of the groups while correspondingly exposing or occluding one at least of the orifices in the other group (6),
characterised in that the fixed part (2) comprises a central orifice (5) which belongs to the first group of orifices and is surrounded by a plurality of other orifices (6) of small size belonging to the second group of orifices, all these orifices being disposed in one and the same plane (9) and in that the movable part (3) comprises two plates (7, 8) adapted for a translatory movement towards or away from each other, performed in a plane substantially parallel with the plane in which are disposed the orifices (5, 6) of the fixed part (2).

2. A mixing valve according to Claim 1, characterised in that in cross-section the surface area of the central orifice (5) is equivalent to that of all the orifices (6) in the second group which surround it.

3. A mixing valve according to Claim 1 or Claim 2, characterised in that the central orifice has a circular cross-section, the orifices (6) in the second family which surround it and which are four in number each being shaped like a quarter of a circle.

4. A mixing valve according to Claim 1 or Claim 2, characterised in that the shape of the orifices (5, 6) in one at least of the groups is adapted to satisfy a desired law corresponding to the proportion of fluids mixed according to the percentage by which the orifices are open.

5. Application of a mixing valve according to any one of the preceding Claims to an air conditioning plant employing pulsed air and of the type comprising:
 – a heating body (14) acting as a heat accumulator about which a heated fluid (15) circulates and is reheated,
 – an intermediate insulating wall (17) which encloses the flow of hot fluid and around which circulates a flow of cold fluid (18),
 – and an outer insulating enclosure (17) enclosing the flow of cold fluid (18),
the two flows of hot fluid (15) and cold fluid (18) circulating in a plant between an inlet (19) situated, in the direction of flow of the media, upstream of the heating body (14) and an outlet (20) situated downstream of this same heating body, characterised in that to control the two flows of fluids, such a mixing valve is employed and is disposed downstream of the heating body (14) on the path along which the two flows of fluids (15, 18) flow.

## Patentansprüche

1. Mischventil für eine Klimatisierungsanlage mittels gepulsten Gasfluides (gepulster Gasfluide) zur Anpassung des Fließens dieses Fluids (dieser Fluide), welches (welche) aus getrennten Versorgungsleitungen kommt (kommen), wobei das Ventil von einem Typ ist mit:
 – einem festen Teil (2), in welchem zwei Gattungen von Öffnungen (5, 6) angeordnet sind, deren jede mit einer dieser Versorgungsleitungen für Fluid verbunden ist,
 – und einem beweglichen Teil (3), der geeignet ist, mehr oder weniger wenigstens eine der Öffnungen (5) der einen Gattung zu verschließen oder freizulegen, wobei zugleich mindestens eine der Öffnungen der anderen Gattung (6) gleichzeitig freigelegt oder verschlossen wird,
dadurch gekennzeichnet, daß der feste Teil (2) eine mittige Öffnung (5) aufweist, die zu der ersten Gattung von Öffnungen gehört und von mehreren anderen Öffnungen (6) verringerten Ausmaßes umgeben ist, welche zu der zweiten Öffnungsgattung gehören, wobei die Gesamtheit dieser Öffnungen in ein und derselben Ebene (9) angeordnet sind, und daß der bewegliche Teil (3) zwei translatorisch bewegliche Platten (7, 8) aufweist bei einer relativen Annäherungs- oder Entfernungsbewegung, die in einer Ebene erfolgt, welche im wesentlichen parallel zu der Ebene liegt, in welcher die Öffnungen (5, 6) des festen Teils (2) angeordnet sind.

2. Mischventil nach Anspruch 1, dadurch gekennzeichnet, daß die Oberfläche der Mittelöffnung (5) im Querschnitt äquivalent zu der Fläche der Gesamtheit der Öffnungen (6) der zweiten Gattung ist, welche sie umgeben.

3. Mischventil nach Anspruch 1 oder Anspruch 2, dadurch gekennzeichnet, daß die Mittenöffnung einen kreisförmigen Querschnitt hat, wobei die Öffnungen (6) der zweiten Gattung, welche ihn umgeben und welche vier an der Zahl sind, jeweils einen Querschnitt eines Viertelkreises haben.

4. Mischventil nach Anspruch 1 oder Anspruch 2, dadurch gekennzeichnet, daß die Form der Öffnungen (5, 6) wenigstens der einen der Gattungen angepaßt ist, um ein gewünschtes Gesetz zu erhalten, welches dem Verhältnis der gemischten Fluide in Funktion des Prozentsatzes des Offenseins der Öffnungen entspricht.

5. Anwendung eines Mischventils gemäß einem der vorhergehenden Ansprüche bei einer Klimatisierungsanlage mittels gepulster Luft der Art mit:
   - einem Erwärmungskörper (14), der einen Wärmespeicher bildet, um welchen ein warmes Fluid (15) zirkuliert und sich erwärmt,
   - einer isolierenden Zwischenwand (17), welche den Strom von warmem Fluid umgibt und um welche ein Strom von kaltem Fluid (18) zirkuliert,
   - und einem äußeren isolierenden Raum (17), welcher den Strom von kaltem Fluid (18) umgibt,
wobei die zwei Ströme von warmem (15) und kaltem Fluid (18) in der Anlage zwischen einer Zufuhr (19), welche in Zirkulationsrichtung der Fluidströme aufstromig von dem Erwärmungskörper (14) angeordnet ist, und einer Entleerung (20) umlaufen, die abstromig von demselben Erwärmungskörper angeordnet ist, dadurch gekennzeichnet, daß zum Regulieren der zwei Fluidströme ein solches Mischventil dadurch benutzt wird, daß man es abstromig vom Erwärmungskörper (14) an dem Durchgangsweg der zwei Fluidströme (15, 18) anordnet.

FIG.1

FIG.2